# EUROPEAN PATENT SPECIFICATION

(11) **EP 3 081 767 B1**
(45) Date of publication and mention of the grant of the patent: **03.06.2020**
(21) Application number: 15163548.9
(22) Date of filing: 14.04.2015
(51) Int. Cl.: F01D 25/08, F02C 7/18

(54) **FLUID DUCT SYSTEM, TURBO ENGINE WITH A FLUID DUCT SYSTEM AND METHOD FOR THERMAL MANAGEMENT AND/OR VENTILATION**
FLUIDLEITUNGSSYSTEM, TURBOMASCHINE MIT EINEM FLUIDLEITUNGSSYSTEM UND VERFAHREN ZUR WÄRMEREGELUNG UND/ODER BELÜFTUNG
SYSTÈME DE CONDUIT DE FLUIDE, TURBOMACHINE AVEC UN SYSTÈME DE CONDUIT DE FLUIDE ET PROCÉDÉ DE GESTION THERMIQUE ET/OU DE VENTILATION

(43) Date of publication of application: 19.10.2016
(73) Proprietor: Rolls-Royce Deutschland Ltd & Co KG, 15827 Blankenfelde-Mahlow (DE)
(72) Inventor: GALINDO-LOPEZ, Carlos Hannover, Dr., 15827 Blankenfelde-Mahlow (DE)
(74) Representative: Maikowski & Ninnemann Patentanwälte Partnerschaft mbB

(56) References cited:
- EP-A2- 2 392 776
- US-A- 4 554 789
- US-A- 5 088 277

## Description

The invention is related to a fluid duct system with the features of claim 1, a turbo engine with a fluid duct system with the features of claim 13 and a method for thermal management and/or ventilation with the features of claim 14.

In certain regions of turbo engines (e.g. gas turbines or aircraft engines) temperatures can be high during operation. Usually, some regions within the turbo engines can contain temperature sensitive targets, e.g. electrical components which are sensitive to high temperatures.

The state of the art of thermal management and/or ventilation of such a first region in the turbo engine, in particular a cowl compartment in between the freestream zone and bypass duct of a turbofan engine, is the use of so called NACA inlets and outlets or NACA intakes. This solution depends on the forward movement of the turbo engine. Therefore thermal management and/or ventilation is hard to achieve if the turbo engine has no relative motion to the surrounding fluid. In case of aircraft engines this can be called an engine-slaved system, or aircraft-driven system.

The operation of a turbo engine, in particular of an aircraft engine, in a motionless state compared to the surrounding fluid is a common mode of operation for a turbo engine. One of many examples would be a turbo engine of an aircraft during taxi, parking, take-off or during "line aircraft maintenance". Hence, the thermal management and/or ventilation has especially great importance if the fluid surrounding the turbo engine is almost at a standstill relative to the turbo engine. The turbo engine will heat up, jeopardizing the normal operation of temperature sensitive targets, e.g. electrical components in a first region of the turbo engine, which in turn can lead, if no thermal management and/or ventilation is present, to failure or loss of the temperature sensitive target and thus its life and reliability.

Furthermore in such a motionless state with no active ventilation it is possible for flammable fluids, in particular flammable vapors to accumulate in certain regions, e.g. the first region of a turbo engine, in particular the cowl compartment inside a turbofan engine, increasing the risk of fire in the region. In particular for this reason airworthiness authorities require for aircraft engines means of ventilation to minimize the probability of ignition of these fluids, in particular the vapors and the resulting hazards if ignition does occur. Therefore, an effective thermal management of a first region within the turbo engine containing at least one temperature sensitive target and/or ventilation of the first region for evacuation of e.g. flammable vapors out of the compartment by ventilation is necessary. So far the thermal management and/or ventilation in turbo engines is mostly dependent from the relative motion of the engine and thus only effective during the turbo engine's forward movement. NACA intakes are quite complex to design in this regard and their compatibility with fire-proof standards is furthermore difficult to evaluate.

It is an object of the present invention to provide for an improved thermal management and/or ventilation of a first region in a turbo engine containing at least one temperature sensitive target by means of which the drawbacks outlined above are reduced or even avoided.

A solution for this is provided by a fluid duct system according to claim 1 and a method according to claim 14.

According to a first aspect of the invention, a fluid duct system for thermal management and/or ventilation of a first region containing at least one temperature sensitive target within a turbo engine, comprises at least one fluid duct element connecting a second region with the first region, said first region having a lower pressure than the second region at least during operation of the turbo engine. The fluid duct element is configured and combined with at least one impingement device of the fluid duct system, so that at least during operation of the turbo engine a pressure gradient is present inside the at least one fluid duct element generating a fluid jet in the first region that emerges from the at least one fluid duct element and said fluid jet impinges at least partially on the at least one impingement device, where the fluid jet's thermal energy is at least partially reduced in order to use the thus at least partially cooler fluid jet for cooling and/or ventilating the first region. The thermal energy of the fluid jet can also be its intrinsic energy.

The turbo engine can e.g. be an aircraft engine. One possible type of aircraft engine is a turbofan engine. Every turbo engine can be described in cylindrical coordinates. Wherein the z-axis points along the longitudinal direction from the front end of the turbo engine towards the back end of the turbo engine and the radial direction is defined by the radial direction of the turbo engine perpendicular to the longitudinal direction.

The first region can comprise a temperature sensitive target such as an electrical component, a coated section of the turbo engine, a core casing, a bearing, a connector, a plastic part, an actuator for vanes in the turbo engine, a movable part in the turbo engine, a fuel line, an oil line, and/or a sealing of the turbo engine. All these units can require in particular a certain amount of thermal management. An electrical component which can be in need of cooling can be an Electronic Engine Controller (EEC) of a turbo engine.

The first region can be rotational symmetric and surround a core of a turbo engine.

In some embodiments the first and second region are separated solely by a separation device, in particular a wall. In other embodiments at least a third region can at least partially be arranged in between the first and second region.

The at least one fluid duct element can for example have a tubular shape. In exemplary embodiments the fluid duct element might be of an ellipsoidal, rectangular or polygonal cross-section. In a particular embodiment it can have a elongated strip-like design, for example with a rectangular cross-section with one side being several times longer than the other.

The fluid duct element can be flexible in some variants and/or consist of a sleeve. Additionally or in the alternative, the fluid duct systems might comprise fluid duct elements which are rigid.

In some variations the cross-section of the at least one fluid duct element is not constant along the length of the at least one fluid duct element. It might for example be shaped like a cone or nozzle with the cross-section of the at least one fluid duct element getting smaller towards the end in the first region.

In some embodiments the at least one fluid duct element can protrude into the first and/or second region. In others it can be flush with one or both sides of the boundaries defining the two regions.

The fluid jet which emerges from the at least one fluid duct element in the first region is generated by a pressure gradient inside the at least one fluid duct element. The pressure gradient is e.g. produced by the pressure difference between the first and second region. A pressure gradient considered suitable would e.g. result from a difference in static pressure between the first and second regions of about 10 psi (≈ 0.7 bar). At least during operation of the turbo engine the higher pressure in the second region compared to the first region might be due to a pressure build up in the second region. For example a compressor might be running at least during the operation of the turbo engine and increase the pressure in the second region, leading to a pressure difference between the first region and second region. Such a compressor in one embodiment is formed by a compressor stage of a turbofan engine.

In other embodiments the pressure difference might be produced or increased due to a lowering of the pressure inside the first region compared to the second region. A pump might for example be running, reducing the pressure in the first region, at least during operation of the turbo engine. This can also lead to the pressure difference between the low pressure first region and the higher pressure second region.

According to the invention, the fluid duct system is designed and configured in such a way that a fluid jet emerging form the fluid duct element impinges at least partially on the at least one impingement device. The at least one impingement device can have various forms and shapes. The first region can comprise it completely or in some variants only partially. The at least one impingement device can e.g. be a part of an already existing structure of a turbo engine. It could also be an extra device arranged at least partially inside the turbo engine. The thermal energy of the fluid jet is at least partially reduced by the impingement process and the thus cooler fluid jet is used for cooling and/or ventilating the first region.

In some embodiments the fluid duct system comprises several impingement devices. The fluid jet emerging from the at least one fluid duct element may then e.g. impinge on several impingement devices. This can happen in successive order.

The amount of fluid per unit time emerging from the at least one fluid duct element can depend inter alia on the pressure gradient inside the at least one fluid duct element and/or the cross-section of it. A higher pressure gradient might lead to a larger amount of fluid per unit time entering the first region. A larger cross-section can also lead to larger amount of fluid per unit time entering the first region. The amount of fluid per unit time usually depends on a combination of several parameters.

In a further variant of the invention the fluid jet is at least partially reflected and/or scattered at the at least one impingement device. The characteristics of the reflection and/or scattering process might be influenced by the characteristics of the at least one impingement device and/or the characteristics of the fluid jet.

The shape of the at least one impingement device might for example be designed to guide the reflected and/or scattered fluid jet in a desired direction. The material of the at least one impingement device can also be chosen to achieve a desired effect. For example the velocity of the reflected and/or scattered fluid jet can depend on the material of the at least one impingement device.

The magnitude of reflection and/or scattering of the fluid jet at the at least one impingement device can inter alia depend on the characteristics of the at least one impingement device. For example a rough surface might lead to more scattering and an even surface of the at least one impingement device can lead to more reflection.

In another embodiment the thermal energy of the at least partially impinged fluid jet is reduced by the impingement process and/or heat convection between the at least partially impinged fluid jet and the at least one impingement device.

The thermal energy loss can also inter alia depend on the velocity of the fluid jet, its momentum, Reynolds number, the distance between the impingement device and the fluid duct element. The temperature of the impingement device can also be changed by the impingement process.

In a further variation the fluid duct system comprises at least one flow guiding means arranged in the first region for guiding the at least partially impinged fluid jet after impingement on the at least one impingement device towards the at least one temperature sensitive target.

The flow guiding means might be at least one deflection plate. The fluid jet can be deflected towards the at least one temperature sensitive target by the deflection plate. In another embodiment the flow guiding means might be a fluid canal which can be entered by the impinged fluid jet. The fluid jet can then be guided and/or redirected towards an intended temperature sensitive target.

In a continued development the first region comprises at least one fluid outlet configured to let a flow of fluid exit the first region. Such an outlet could for example be a NACA outlet or an opening in the first region. The fluid jet which enters the first region through the at least one fluid duct element introduces a certain amount of fluid per unit time into the first region. Through the fluid outlet a certain amount of fluid per time unit can exit the first region. In certain embodiments almost the same amount of fluid per unit time can enter the first region and exit it. This can lead to a balance in the first region, keeping the amount of fluid in the first region roughly constant. A simple example of describing a variation of this can be that the amount of fluid entering the first region pushes the same amount of fluid out of the first region through the at least one fluid outlet. In certain embodiments this can lead to a flow of fluid originating at the at least one fluid duct element, flowing towards the fluid outlet and at least partially exiting the first region through the outlet. The fluid might swirl around in the first region before at least partially exiting it. The flow pattern of the fluid can take a lot of different shapes depending on the circumstances.

In another embodiment is the at least one fluid duct element of a length and/or arranged in an angle relative to the longitudinal direction of the turbo engine, predefined in dependence of a desired velocity and/or direction of the fluid jet. A length of the fluid duct element could be e.g. set in such a way that a distance between its outlet and the impingement device lies in a predefined range. For example the length and a diameter of t the fluid duct element could be selected in such a way that the distance between the fluid duct element's outlet and the impingement device is greater than or equal to two or three times the (average inner) diameter of the fluid duct element. Thus, a inner diameter of the fluid duct element could e.g. be about 20 mm, whereas said distance is about 60 mm.

The angle of the at least one fluid duct device relative to the longitudinal direction (from now on just angle) can predefine the direction of the fluid jet. It can be set so that the fluid jet impinges on a desired impingement target. For example an angle of 90° might be used if the desired target lies at least partially on the same radial axis as for example a straight tubular fluid duct element arranged along said radial axis. In other embodiments the fluid jet can be directed towards the at least one desired impingement device or a portion of it by setting the angle and length of the at least one fluid duct element accordingly.

In another embodiment has the at least one fluid duct element an inner diameter which is significantly smaller than the length of the at least one fluid duct element. For example a straight tubular fluid duct element might be at least ten times longer than its inner diameter.

In further embodiments can the fluid duct system be implemented in a turbofan engine and the second region lies at least partially in a bypass duct of the turbofan engine and the first region lies at least partially in a cowl compartment of the turbofan engine. The cowl compartment can have an outer and inner cowl surface. The inner cowl surface is inside the cowl compartment radial closer to the center axis of the turbofan engine and the outer cowl surface is on the outside of the cowl compartment radial further away than the inner cowl surface from the center axis of the turbo engine. The cowl compartment can for example comprise a temperature sensitive Electronic Engine Controller (EEC) of the turbofan engine which might need thermal management, in particular cooling, due to a upper temperature limit of the EEC typically being around 95°C. The cowl compartment can also comprise a fluid outlet, e.g. a NACA outlet allowing a fluid to exit the cowl compartment. Usually the pressure in the bypass duct is higher than the pressure in the cowl compartment during operation of the turbofan engine. This can be due to a compressor stage of the turbofan engine, compressing at least partially the fluid (in particular air) in the bypass duct. The higher pressure in the bypass duct may be used in a fluid duct system according to the invention for producing a pressure gradient in the at least one fluid duct element and resulting in a fluid jet emerging from the at least one fluid duct element inside the cowl compartment. For example under so called hottest day conditions this fluid jet can have roughly the temperature of the fluid inside the bypass duct, which can be around 110°C. The impingement process of the fluid jet can reduce its temperature below 95°C, even at a standstill of the turbofan engine so that the fluid jet may then be used for cooling the cowl compartment and electronic components arranged therein, although the fluid of the fluid jet originates from the relatively hot bypass duct. The fluid jet can also result in a flow of fluid exiting the cowl compartment through the fluid outlet. This can produce ventilation in the cowl compartment and hazardous vapors, e.g. flammable vapors can be ventilated out of the cowl compartment reducing the fire risk. Besides ventilating the cowl compartment of flammable vapors the flow of fluid can constitute dilution means for fire extinguisher agents.

In another variant the fluid duct system is to be implemented in a turbofan engine and the at least one impingement device is a region of a cowl compartment wall of the turbofan engine and/or an extra piece of material located at least partially in the cowl compartment. The fluid jet can for example impinge at least partially into the inner cowl surface of the cowl compartment wall. This can reduce its thermal energy.

In a further development the region of the cowl compartment wall comprising the at least one impingement device is designed to be cooled from the outside by a fluid flow at least during movement of the turbofan engine. For example, the region of a cowl compartment wall comprising the at least one impingement device can be cooled by a fluid streaming by the outer cowl surface during movement of the turbofan engine. Heat can dissipate from the region of the cowl compartment wall into the fluid streaming by the outer cowl surface. Because the outer cowl surface can be cooled this can also cool the inner cowl surface into which the fluid jet impinges. This can increase the thermal energy loss of the impinged fluid jet. Accordingly, in such an embodiment the fluid duct system in a turbofan engine may make use of two heat transfer processes during a flight situation; a first heat transfer process between the impinging fluid jet and the inner cowl compartment wall defining the at least one impingement device and a second heat transfer process between the outer cowl compartment wall and external ram air which washes the outer compartment wall at high speed.

The region of the cowl compartment wall comprising the at least one impingement device can be structurally adapted in order to improve the thermal energy loss of the fluid jet. It might for example be designed with a recess or channel for the fluid streaming by. Such a design can improve the cooling effect of the fluid streaming by this region.

This region of the cowl compartment wall can also be adapted in order to increase its mechanical strength and/or thermal resilience. The region of the cowl compartment wall might be under additional strain due to the impinging fluid jet. Therefore an adaptation to increase its mechanical strength and/or thermal resilience might be necessary.

In a further embodiment the at least one fluid duct element comprises exiting means, in particular a nozzle, to influence the characteristics of the fluid exiting the at least one fluid duct element. The exiting means might be adapted to for example increase the velocity of the fluid jet. It could also define the fluid jet's diameter and/or direction. The exiting means could also be adapted to split the fluid flowing through the at least one fluid duct element into at least two fluid jets. The at least two fluid jets emerging from the at least one fluid duct element could impinge on the at least one impingement device. The angle of impingement could be different for the at least two fluid jets. In another embodiment the at least two fluid jets might impinge on different impingement devices.

According to the invention one of the following properties, namely an angle of the at least one fluid duct element relative to the longitudinal direction of the turbo engine, length of the at least one fluid duct element or shape of the exiting means of the at least one fluid duct element is adjustable, e.g., by means of a control unit.

In addition or in the alternative the volume of the first region, thus, e.g., the cowl compartment, may be adjustable. Thereby a smaller volume may temporarily be provided, for example by at least partially displaceable inner side walls, which results in a reduction of the necessary fluid jet and/or ventilation flow to achieve the same thermal management and/or ventilation effect compared to a larger volume.

In a continued development at least one adjustable property might be controllable by a control unit. For example, the length or angle of the fluid duct element could be adjusted - preferably dynamically adjusted - by a control unit depending on the desired thermal management and/or ventilation effect. Such a control unit may be responsive to at least one input signal which drives the adjustment. The at least one input signal may inter alia derive from or indicate one of the following: engine fan rotational speed, ambient pressure, ambient temperature, and altitude. Accordingly, the length and/or angle of the fluid duct element may be adjustable as a function of engine fan rotational speed, ambient pressure, ambient temperature, and/or (flight) altitude and thus may differ due to varying operating conditions of the turbo engine.

In other variations the fluid duct system comprises a plurality of fluid duct elements arranged in a pattern around the core of the turbo engine, connecting the first and the second region. Such a pattern could for example be a rotationally symmetric pattern around the core of the turbo engine. The pattern could be adapted depending on the desired thermal management and/or ventilation effect. The pattern could be defined by set distances between the fluid duct elements. For example a rectangular pattern with the fluid duct elements arranged with certain distances to each other is possible. In one embodiment a distance between two fluid duct elements in a circumferential direction of a turbo engine could more or less be equal to a distance between two fluid duct elements in the engine's longitudinal direction. A distance between two fluid duct elements in a circumferential direction of a turbo engine and/or a distance between two fluid duct elements in the engine's longitudinal direction could furthermore be defined in such a way that it is greater than or equals to about five times an (average inner) diameter of the fluid duct elements.

In other embodiments a pattern can be formed by a plurality of fluid duct elements with different lengths and/or angles. One example would be a concentric pattern with the shortest fluid duct elements arranged at an angle of 90° to the longitudinal direction in the center. With increasing diameter of the concentric circles the length of the fluid duct elements would increase and the angle be adapted, so that all fluid duct elements would point at the same impingement device located above the center of the concentric circles. A further aspect of the present invention is a method for thermal management and/or ventilation of a first region containing at least one temperature sensitive target within a turbo engine according to claim 14.

A method according to the invention uses a pressure gradient inside at least one fluid duct element connecting a second region with the first region, said first region having a lower pressure than the second region at least during operation of the turbo engine, in order to generate a fluid jet in the first region. The fluid jet emerging from the at least one fluid duct element is directed towards at least one impingement device, so that the fluid jet impinges at least partially on the at least one impingement device where its thermal energy is at least partially reduced and the thus at least partially cooler fluid jet is used for cooling and/or ventilating the first region containing the at least one temperature sensitive target.

A method according to the invention may be carried out by a fluid duct system according to the invention. Accordingly, any advantages and features described with regard to the fluid duct system or the method apply mutatis mutandis to the system and the method. Exemplary embodiments of the invention are described exemplary in the following figures.
- FIG 1A: shows a schematic cross-section of a turbo engine, in particular a turbofan engine with a first embodiment of a fluid duct system;
- FIG 1B: shows a cross-section of the turbo engine of FIG 1A on a larger scale;
- FIG 2: shows a schematic cross-section of a turbo engine, in particular a turbofan engine with a second embodiment of a fluid duct system;
- FIG 3: shows an embodiment of a schematic pattern of a plurality of fluid duct devices;
- FIG 4: shows a fluid duct element comprising a nozzle at its end reaching into a second region.
- FIG 5A: shows a longitudinal cross-sectional view of a region of a cowl compartment wall comprising an impingement device
- FIG 5B: shows a radial cross-sectional view of a first embodiment of the region of the cowl compartment wall shown in FIG 5A
- FIG 5C: shows a radial cross-sectional view of a second embodiment of the region of the cowl compartment wall shown in FIG 5A
- FIG 6A: shows a longitudinal cross-sectional view of a region of a cowl compartment wall comprising an impingement device with a outer fluid duct
- FIG 6B: shows a radial cross-sectional view of a first embodiment of the region of the cowl compartment wall shown in FIG 6A
- FIG 6C: shows a radial cross-sectional view of a second embodiment of the region of the cowl compartment wall shown in FIG 6A

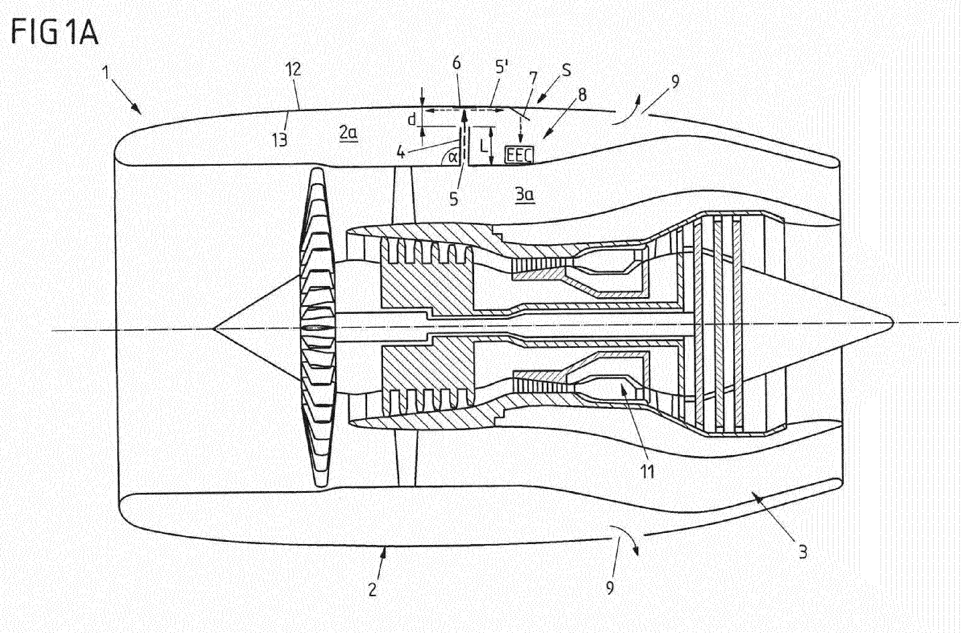

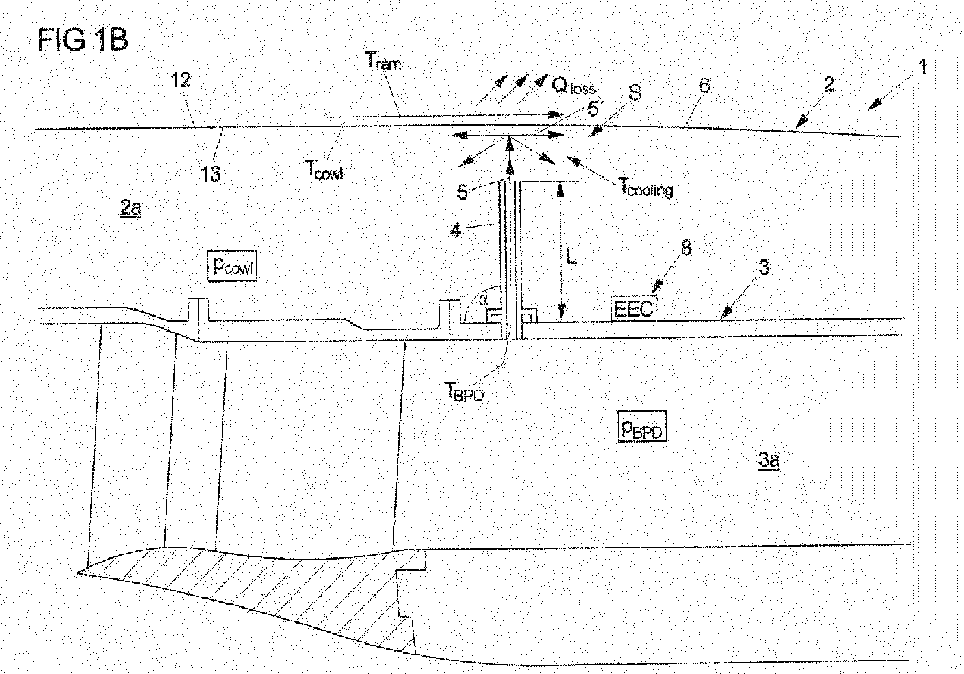

In FIG 1 a turbofan engine 1 of an aircraft is shown. A turbofan engine 1 is an example for a turbo engine. The turbofan engine 1 is surrounded and submerged into a fluid which can for example be air. In the following description it is always assumed that the fluid is air. A region surrounding the turbofan engine 1 is called freestream region. The turbofan engine 1 comprises inter alia a turbo engine core 11, a bypass duct 3 surrounding it and a cowl compartment 2 being arranged radial in between the freestream zone and the bypass duct 3. The cowl compartment 2 defines a first region 2a and the bypass duct 3 defines a second region 3a. The turbofan engine core 11, the bypass duct 3 and the cowl compartment 2 can be rotationally symmetric around the longitudinal center axis of the turbofan engine 1.

Within the first region 2a of the cowl compartment 2 a temperature sensitive target 8 is arranged. The temperature sensitive target 8 can be an Electronic Engine Controller (EEC). The temperature sensitive target 8 in the form of the EEC can need thermal management, in particular cooling to function properly. For this purpose a fluid duct system S is provided.

The fluid duct system S in particular comprises a fluid duct element 4 connecting the second region 3a of the bypass duct 3 with the first region 2a of the cowl compartment 2. The fluid duct element 4 is designed with a length L and an angle α defining an inclination of the elongated fluid duct element 4 with respect to a longitudinal direction of the turbofan engine 1. The fluid duct element 4 is of a straight tubular shape, wherein the length L is at least ten times longer than the inner diameter of the fluid duct element 4.

During operation of the turbofan engine 1 the pressure in the bypass duct 3 is higher than the pressure in the cowl compartment 2. This results in a pressure gradient in the fluid duct element 4 connecting the two regions 2a and 3a. The pressure gradient generates a flow of air from the bypass duct 3 into the fluid duct element 4. The flow of fluid emerges at an end of the fluid duct element 4 within the first region 2a of the cowl compartment 2 as a fluid jet 5, symbolized by a dashed arrow. This fluid jet 5 is used for cooling and ventilating the cowl compartment 2. In some variants it is also used to appropriately dilute the fire extinguisher agent.

For example, under so called hottest day conditions the air in the bypass duct 3 may have a temperature around 110°C, whereas the EEC 8 has an upper temperature limit around 95°C. Thus, a flow of fluid originating from the bypass duct 3 may not be used without further ado for cooling purposes within the cowl compartment 2. For this reason the present invention makes use of an impingement process as will be described in more detail in the following.

The cowl compartment 2 has a wall 6 with an outer surface 12 on the outside and an inner surface 13 on the inside. In the embodiment shown a region of the cowl compartment wall 6 at the inner surface 13 forms an impingement device of the fluid duct system S according to the invention. A portion of the cowl compartment wall 6 forming the impingement device may be thicker than other regions of the cowl compartment wall 6. The cowl compartment 2 comprises also fluid outlets 9 which can be openings 9 in the cowl compartment wall 6. A flow guiding means 7, e.g. a deflection plate is arranged within the cowl compartment 2, too.

The fluid duct element 4 is configured and arranged in such a way that the fluid jet 5 emerging therefrom is directed to the cowl compartment wall 6, preferably - if present - nearby the flow guiding means 7. The length L of the fluid duct element 4 is set in such a way that a distance d between its outlet and cowl compartment wall 6 lies in a predefined range. Here, the length L and a diameter of the fluid duct element 4 is selected in such a way that the distance d between the fluid duct element's outlet and the impingement device 6 is approximately equal to three times the (average inner) diameter of the fluid duct element 4. For example, a inner diameter of the fluid duct element 4 would e.g. be about 20 mm, whereas said distance d is about 60 mm. Thus, the fluid jet 5, symbolized by a dashed arrow in FIG 1A, emerges from the fluid duct element 4 with a desired velocity and impinges at least partially on a portion of the inner surface 13 of the cowl compartment wall 6 forming the impingement device. In FIG 1A the (inclination) angle α of the fluid duct element 4 is set to 90° so that the direction of flow of fluid jet 5 is perpendicular to inner surface 13 of the cowl compartment wall 6. Due to the impingement process the cowl compartment wall 6 will heat up; the thermal energy of the cowl compartment wall 6 increases. Thereby, the thermal energy of the fluid jet 5 is reduced. A further reduction in thermal energy of the fluid jet 5 is achieved by heat convection between the fluid jet 5 and the cowl compartment wall 6 at the inner surface 13 of the cowl compartment wall 6.

The freestream zone air usually has a temperature around 20°C at a standstill of the plane. During a flight the freestream zone air or ram air has a even significantly lower temperature. Thus, the freestream zone air cools the outer surface 12 of the cowl compartment wall 6 due to its relative low temperature. Thereby, the outer surface 12 can transfer some of its heat to the air surrounding it. This additional heat transfer process will also cool down the inner surface 13 improving the cooling effect on the flow of fluid from the impinged fluid jet 5. A lower temperature of the cowl compartment wall 6 results in a larger thermal energy loss effect for the fluid jet 5. If the temperature difference is greater the heat transfer is greater between the fluid jet 5 and the cowl compartment wall region 6. Consequently, at least during movement of the turbofan engine 1 the cooling effect for the region of the cowl compartment wall 6 is increased due to air flowing past the outer surface 12. The outer surface 12 loses a larger part of its heat to moving air which is constantly replaced. This can inter alia be due to the fact that a larger amount of relatively cool air comes in contact with the outer surface 12 when the turbofan engine 1 is moving.

Due to the thermal energy loss of the fluid jet 5 during and after the impingement process (when the fluid at least temporarily flows along the inner surface 13 of the cowl compartment wall 6), the fluid jet's temperature can drop by more than 15°C. The fluid jet after impingement 5', symbolized by dotted arrows, therefore reaches a temperature below the upper temperature limit of the EEC 8 so that it may be effectively used for cooling and ventilating the cowl compartment 2.

After impingement the fluid jet 5' can be guided towards the EEC 8 by the flow guiding means 7. In the embodiment of FIG 1A a deflection plate deflects the fluid jet 5' at least partially. It gets redirected towards the temperature sensitive target, the EEC 8. A guided flow of fluid will thus hit the EEC 8 and effectively cool it. The cooling fluid jet 5' can prevent potential overheating of the EEC 8 that could lead to unit malfunction, and potentially engine shutdown.

Another effect of the fluid jet 5 entering the cowl compartment 2 is the at least partial ventilation of the cowl compartment 2. Almost the same amount of air entering the cowl compartment 2 through the fluid duct element 4 can exit the cowl compartment 2 through the fluid outlets 9, symbolized by curved arrows. Therefore a flow of fluid within the cowl compartment 2 is generated. It can swirl around within the cowl compartment 2 before it exist through the fluid outlets 9. This generates at least partially a ventilation effect inside the cowl compartment 2. The air within the cowl compartment 2 is constantly at least partially replaced by new air out of the bypass duct 3. The ventilation decreases the hazard of a possible accumulation of flammable vapors within the cowl compartment 2. The vapors can be ventilated out of the cowl compartment 2 through the fluid outlets 9 by the generated flow of fluid.

It has to be noted that the cowl compartment wall 6 may be locally adapted in the area where the fluid jet 5 impinges onto its inner surface 13 in order to increase the mechanical strength of the wall and/or increase the heat flux. For example, an extra piece of material may be located at the cowl compartment wall 6 or the outer surface 12 may be provided with a channel or recess in order to locally improve the heat transfer from the cowl compartment wall 6 to the ambient and in particular to an outer air flow during operation of the turbofan engine 1 and the aircraft flying. Due to a channel or recess the thickness of the cowl compartment wall 6 may, e.g., be locally reduced in an area where the fluid jet 5 impinges so that an increased heat transfer rate may be achieved here.

The processes outlined above are further illustrated by FIG 1B in which sections of the turbofan engine 1 of FIG 1A are depicted on a larger scale and in which furthermore temperature and pressure conditions are illustrated.

As already discussed above, the shown embodiment provides for a passive system for ventilating and cooling the systems inside the cowl compartment 2 comprising one (or more) metallic (or composite) tubular fluid duct elements 4 installed on the bypass duct 3, with an appropriate angle of inclination α, extending from the outer structure of the bypass duct 3 until a certain distance d from the internal surface of the cowl compartment wall 6. By means of the fluid duct element 4 air is supplied to the cowl compartment 2 by means of differential pressure between the bypass duct stream and the cowl compartment 2 since a (static) pressure p_{BDP} in the bypass duct 3 is higher than a (static) pressure p_{cowl} in the cowl compartment 2, in particular when a compressor stage of the turbofan engine 1 is under operation. The air removed from the bypass duct air stream - having a temperature T_{BPD} flows through the fluid duct element 4 and ejects as a fluid jet 5 into the cowl compartment 2 with such momentum to impinge onto the inner surface 13 of the cowl compartment wall 6 having a temperature T_{cowl} (T_{cowl} < T_{BPD}) and afterwards bounces back and re-distributes inside the cowl compartment 2. Due to this impingement process the temperature of the fluid jet 5 reduces to T_{cooling} with T_{cooling} < T_{cowl} < T_{BPD}.

The corresponding ventilation process can be described as follows:

| | |
|---|---|
| step 1a: | Differential pressure between the cowl compartment 2 and the bypass duct 3 soaks an amount of air from the bypass duct air stream; |
| step 1b: | Air flows through one (or more) fluid duct element(s) 4 installed on the bypass duct 3 being preferably formed as a (or more) ventilating tube(s) and pointing towards the cowl compartment 2 with certain direction or inclination; |
| step 1c: | Air ejects from the one (or more) fluid duct element(s) 4 as a fluid jet 5 with sufficient momentum to impinge onto the inner surface 13 of the cowl compartment wall 6; |
| step 2a: | By means of the impingement process, the air of the fluid jet 5 losses internal energy to the cowl compartment wall 6 on which impinged, since the cowl compartment wall temperature T_{cowl} is cooler than the air stream originating from the bypass duct 3; |
| step 2b: | Therefore, the air bounces back into the cowl compartment 2 with a cooler suitable temperature T_{cooling} to ventilate and provide the required cooling temperature; |
| step 3: | The air is exhausted to the atmosphere by means of at least one or several conventional ventilation outlet 9 provided at the cowl compartment wall 6. |

A first heat transfer process occurs due to the temperature of the air of the impinging fluid jet 5 and the temperature T_{cowl} of the cowl compartment wall 6. By means of this, the cowl compartment wall 6 changes its level of internal energy (and temperature). However, when the aircraft is moving, this temperature T_{cowl} reduces significantly due to the external ram air which washes the outer surface 12 of cowl compartment wall 6 at high speed. A second heat transfer process takes place here, since the heat loss from the air originating from the bypass duct 3 and emerging from the fluid duct element 4 is then removed by the ram external air having a temperature Tᵣₐₘ << T_{BPD} (under normal operation conditions of the turbofan engine and the aircraft taxing or flying) due to forced convection. This is symbolized in FIG 1B by Qₗₒₛₛ.

When the aircraft is not moving, mainly the first heat transfer process occurs, since the cowl compartment wall 6 is usually at a lower temperature T_{cowl} compared to the air temperature in the bypass duct 3, and of substantial mass to provide a heat sink. The heat transfer process in this case is mainly driven by the jet velocity (which depends upon the fluid duct's diameter and massflow of cooling air) and by the orientation and direction of the fluid duct element(s) relative to the inner surface 13 of the cowl compartment wall 6, since this drives the rate at which heat is transferred onto the cowl compartment wall 6. In summary, a differential pressure between the cowl compartment 2 (with at least one outlet 9 to ambient) and the bypass duct 3 drives a certain mass of air through at least one fluid duct element 4 of the fluid duct systems S into an impingement process on the inner surface 13 of the cowl compartment wall 6. A fluid jet 5 emerging from the fluid duct element 4 due to the differential pressure is cooled down and spreads over for ventilating, cooling and also to serve for diluting of fire extinguishing agent when required in the cowl compartment 2.

Such a solution has several advantages e.g. over a system with flushed inlets or NACA intakes:
1. Simple geometry which reduces the complexity in complex design and thus the cost for implementation.
2. A quicker and less expensive component qualification process: The proposed ventilation system feeding air by means of one (or more) fluid duct element(s) 4, in which the fluid duct element(s) 4 can be metallic and therefore suffice the fireproofness requirement better than the flushed inlets.
3. A quicker and less expensive modeling process: The proposed fluid duct system S feeding air by means of one (or more) fluid duct element(s) 4 can be easily computationally modeled, since the airflow in this condition (e.g. driven by differential pressure), and the following impingement process can be modeled with simple computational tools.
4. A quicker and less risky validation process: aero and temperature measurements in flight test for a flushed inlet are less controllable than flow and temperature measurement for fluid duct element(s) 4.
5. Future design changes (e.g. cost reduction, weight, aero improvements) can be done in the nacelle (cowl) without detrimental impact in ventilation, cooling or fire extinguishing concentration of the cowl compartment 2 and by the orientation and direction of the fluid duct element(s) 4, since this drives the rate at which heat is transferred from the impingement onto the cowl compartment wall 6.

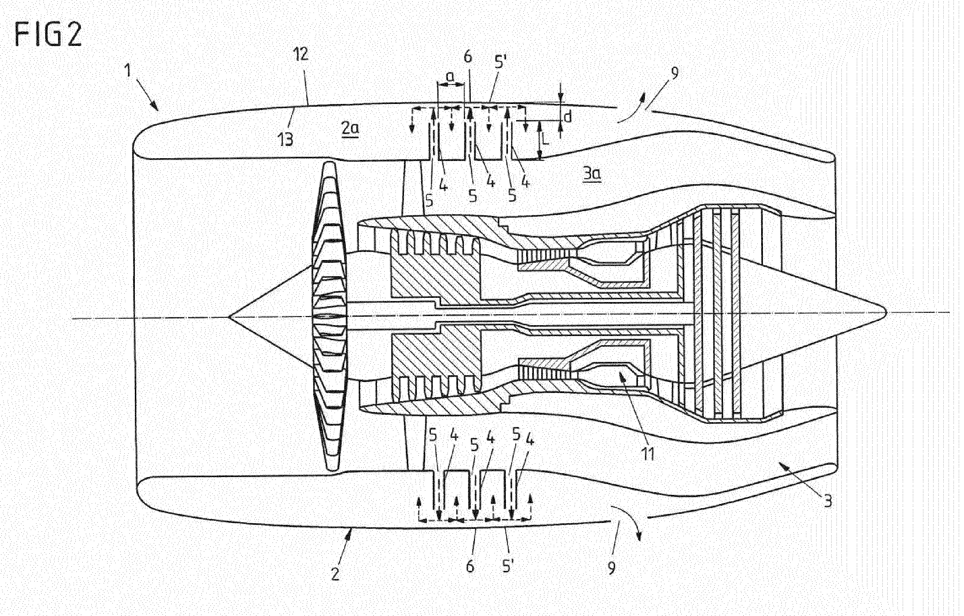

In FIG 2 a second embodiment of a fluid duct system is shown. It comprises instead of one fluid duct element 1 several fluid duct elements 4, so that reference can be made to the above description.

The shown turbo fan engine 1 is almost completely the same as in FIGs 1A and 1B. The only differences are that a temperature sensitive target in form of the EEC 8 is not shown here, neither is any flow guiding means 7 shown and instead of one fluid duct element 4, several are used in this embodiment.

The fluid duct elements 4 are of the same shape as in FIGs 1A and 1B. In this embodiment the several fluid duct elements 4 are arranged in three rings around the engine core 11, connecting the bypass duct 3 with the cowl compartment 2. In each of the three rings several fluid duct elements 4 are arranged rotational symmetric around the engine core 11.

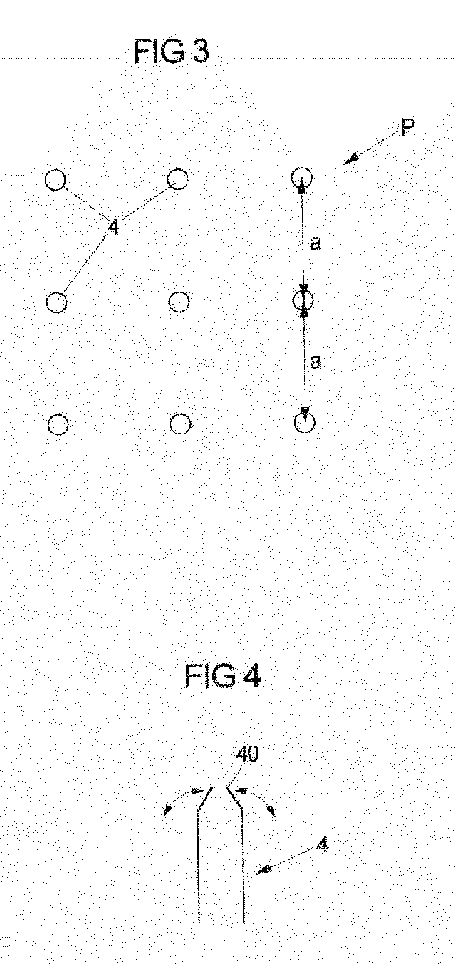

In FIG 3 another possible pattern of a plurality of fluid duct elements 4 having a circular cross-section is shown. A plurality of fluid duct elements 4 can increase the cooling and ventilation effect of the fluid duct system S. It is a symmetric pattern with a total of nine fluid duct elements 4. They are arranged in a square, formed of three equidistant rows with three fluid duct elements 4 each. The three fluid duct elements 4 in each row are also arranged equidistant to each other. In this embodiment a distance between two fluid duct elements 4 in a circumferential direction of the turbofan engine 1 is thus equal to a distance a between two fluid duct elements 4 in the engine's longitudinal direction. Furthermore, a distance a between two fluid duct elements 4 in a longitudinal direction is defined in such a way that it approximately equals to about five times the (average inner) diameter of the fluid duct elements 4. Given a typical cowl compartment volume of about 3m³ it could be verified that such an arrangement with nine or more tubular fluid duct elements 4 having a diameter of about 20 mm and resulting in a distance between the fluid duct elements 4 of about 100 mm provides for an adequate ventilating and cooling effect.

It is, however, clear that different patterns may also be used to arrange several fluid duct elements 4 in a cowl compartment 2 in order to achieve a desired ventilating and cooling effect. For example, due to restrictions in installation space one can deviate from an exact square or circular arrangement of the several fluid duct elements 4.

FIG 4 shows in detail a further development of a fluid duct element 4 having an exiting means in the form of a nozzle 40 to influence the characteristics of the fluid exiting the fluid duct element 4. The nozzle geometry influences the fluid jet characteristics and thus the impingement process. In one embodiment the inclination angle α and/or nozzle diameter may be manually or automatically adjustable in dependence of an operation mode of the turbofan engine 1 and/or in dependence of detected operational state of the turbofan engine 1 or the aircraft to which it is mounted. Accordingly, the impingement process and thus the cooling and ventilating effects may be manually and/or automatically controlled or regulated. A fluid duct element 4 can be e.g. made adjustable by forming it at least partially flexibly so that it may be bent and/or by mounting it via pivot bearing to the bypass duct structure or an inner cowl compartment wall. Generally, a fluid duct element 4 may be a single piece. Nevertheless, in particular with regard to influencing the characteristics of the fluid jet 5 emerging therefrom and/or with regard to an adjustability, a fluid duct element 4 may also be comprised of at least two separate parts connected to each other.

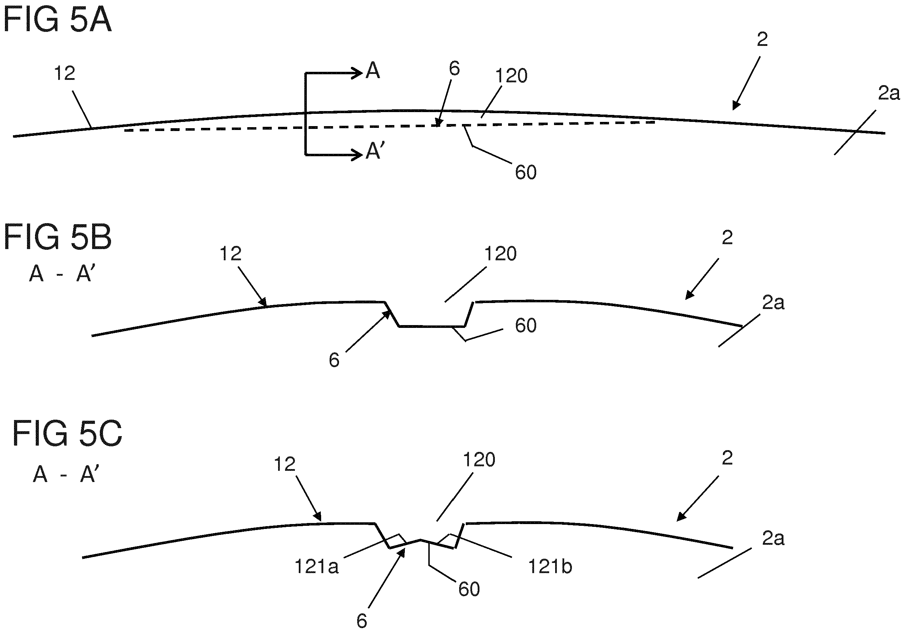

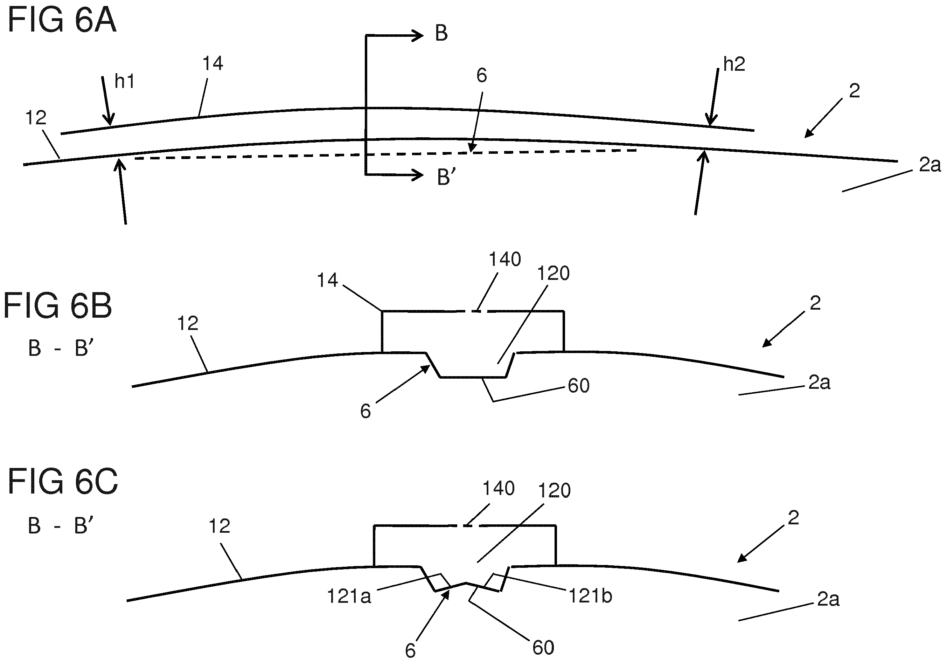

FIGs 5A to 5C and FIGs 6A to 6C respectively show further exemplary embodiments with a differently designed outer surface 12 in the area of the impingement device 6.

FIG 5A shows a longitudinal cross-section view of a part of a cowl compartment 2 of a turbofan engine 1. As for example in FIG 1A the cowl compartment 2 defines the first region 2a. The figure shows in detail the part of a cowl compartment 2 where a region of the cowl compartment wall defines the at least one impingement device 6. The front of the turbofan engine 1 is arranged on the left side and on the right side is the back of a turbofan engine 1. The region of the cowl compartment wall comprising the at least one impingement device 6 is formed by a recess 120 in the outer surface 12 of cowl compartment wall. Due to the recess 120 the inner surface 13 comprises a protrusion constituting the impingement device 6 with a projecting impingement surface 60.

The channel-like recess 120 is adapted and configured to cool the outer surface 12 of the cowl compartment wall from the outside more effectively by a fluid flow during movement of the turbofan engine 1. The recess 120 is designed and adapted to increase the cooling of the impingement device 6 and therefore the thermal energy loss of the impinging fluid jet 5. For example, the velocity of the external ram air washing over the outer surface 12 of the compartment wall might be increased due to the recess 120 and thus the cooling effect by heat dissipation at the impingement surface 60 within the cowl compartment 2.

In the embodiments of FIGs 5A to 5C the channel-like recess 120 extends in parallel to the longitudinal axis of the turbo fan engine 1 and comprises a depth which varies along its extension having its greatest depth in a middle section above the fluid duct element(s) 4. The channel-like recess 120 may also comprise a tapered rear end.

As can be seen from Fig 5B showing a radial cross-sectional view, the recess 120 may have a flat channel bottom section and two preferably slightly inclined side sections.

Fig 5C shows a radial cross-sectional view of a differently designed recess 120. Here, the channel-like recess 120 comprises two inclined bottom sections 121a and 121b instead of a single flat channel bottom section as shown in FIG 5B. The channel bottom is thus formed by the two inclined bottom sections 121a and 121b which define an obtuse angle between them so that a central peak middle section and two small longitudinal trench-like depressions are formed in the channel-like recess 120. The highest point of the bottom surface defined be the peak middle section here does not extend over the lateral edges of the recess 120. However, it has to be noted that embodiments are possible in which the peak middle section projects from the recess bottom over the lateral edges and/or the inclined bottom sections 121a and 121b define an acute or right angle between them.

FIGs 6A to 6C show a further development based on the embodiments of FIGs 5A to 5C in which an tubular outer fluid duct 14 is added at the outer surface 12 cover the channel-like recess 120. External ram air can enter the outer fluid duct 14 and therefore the recess 120 at a open front side and after flowing through it exit it again at a rear end. The outer fluid duct 14 is adapted and configured to further aid the cooling of the outer cowl surface of the cowl compartment in the region of the recess. The outer fluid duct 14 being arranged on the outside of the cowl compartment 2 above the recess 120 and being wider than the recess 120 encases the recess 120 almost completely. In combination with the recess 120 the outer fluid duct 14 constitutes a tubular fluid passage which, in the area of the fluid duct element(s) 4, projects, on the outside of the cowl compartment 2, from the outer surface 12 and, in the inside of the cowl compartment 2, from the inner surface 13.

On a front side of the outer fluid duct 14 being closer to a front of the turbofan engine 1 (on the left side in FIGs 6A to 6C) the outer fluid duct 14 has a height h1 above the outer surface 12 of the cowl compartment wall. On the rear side closer to the back of the turbofan engine 1 the outer fluid duct 14 has a different height h2 (h2 < h1) above the outer surface 12 of the cowl compartment wall. The height of the outer fluid duct 14 changes continuously from the height h1 to the height h2 along its length.

As can be seen from FIG 6B showing a radial cross-sectional view, the outer fluid duct 14 may have two side walls and a top wall. The side walls are arranged outside of the recess 120. In the exemplary embodiment of FIG 6B the side walls are in each case arranged in a right angle with respect to the top wall, although different arrangements - preferably defining obtuse angles are naturally possible.

As can also been from FIG 6B, the top wall of the outer fluid duct 14 comprises at least one fluid opening 140 through which a fluid can enter and/or exit the outer fluid duct 14 in addition to its front and back. In case several fluid openings 140 are provided they may aligned along the direction of extent of the outer fluid duct 14. In addition or in the alternative, one or several fluid openings may also be provided on one or each side wall of the fluid duct 14.

Fig 6C shows a radial cross-sectional of a further embodiment in which the outer fluid duct 14 of FIG 6B is combined with the channel-like recess 120 having peak middle section as shown in FIG 5C.

The embodiments shown above relate to aircraft turbo engines, in particular turbofan engines 4. Other embodiments - not shown - relate to other turbo engines such as e.g. gas turbines. Fluid duct systems S with at least one fluid duct element 1 can also be used for thermal management and/or ventilation of a first region within those types of engines. Here also the pressure gradient inside the at least one fluid duct element 1 can be coupled to the operation of the turbofan engine 1. In other embodiments - not shown here - compressors or pumps can be used in connection with the fluid duct element 4 to provide a pressure gradient inside the fluid duct element 4 to achieve thermal management and/or ventilation of the first region within the turbo engine 1.

It should be understood that the above description is intended for illustrative purposes only, and is not intended to limit the scope of the present disclosure in any way.

### Reference list

- 1: turbofan engine
- 2: cowl compartment
- 2a: first region
- 3: bypass duct
- 3a: second region
- 4: fluid duct element
- 40: nozzle
- 5: fluid jet
- 5': fluid jet after impingement
- 6: region of cowl compartment wall (impingement device)
- 60: protrusion impingement surface
- 7: flow guiding means
- 8: temperature sensitive target
- 9: fluid outlet
- 11: turbofan engine core
- 12: outer surface of the cowl compartment wall
- 120: recess (e.g. channel)
- 121a/b: channel bottom sections
- 13: inner surface of the cowl compartment wall
- 14: outer fluid duct
- 140: fluid opening(s)

- a: distance between two fluid duct elements
- d: distance between outlet of fluid duct element and impingement device
- h1: height 1 of outer fluid duct
- h2: height 2 of outer fluid duct
- L: length of the fluid duct element
- P: pattern
- S: fluid duct system

- α: angle of the fluid duct element relative to the longitudinal direction of the turbo engine

## Claims

1. A fluid duct system for a turbo engine (1) comprising at least one fluid duct element (4) with exiting means (40), an impingement device (6) and a first region (2a), the fluid duct system being configured for thermal management and/or ventilation of the first region (2a) containing at least one temperature sensitive target (8), wherein the at least one fluid duct element (4) is configured for connecting a second region (3a) with the first region (2a), said first region (2a) having a lower pressure than the second region (3a) at least during operation of the turbo engine; and wherein the at least one fluid duct element (4) is further configured and combined with the at least one impingement device (6), so that
- at least during operation of the turbo engine (1) a pressure gradient is present inside the at least one fluid duct element (4) generating a fluid jet (5) in the first region (2a) that emerges from the at least one fluid duct element (4) towards the at least one impingement device (6) and
- during operation said fluid jet (5) impinges at least partially on the at least one impingement device (6), where the fluid jet's thermal energy is at least partially reduced in order to use the thus cooler fluid jet (5) for cooling and/or ventilating the first region (2a), **characterised in that** during operation at least one of the following properties, namely angle of the at least one fluid duct element (4) relative to the longitudinal direction of the turbo engine (1), length of the at least one fluid duct element (4) or shape of the exiting means (40) of the at least one fluid duct element (4) are adjustable.

2. The fluid duct system according to claim 1, wherein the fluid jet (5) is at least partially reflected and/or scattered at the at least one impingement device (6).

3. The fluid duct system according to at least one of claims 1 to 2, wherein the at least partially impinged fluid jet's (5) thermal energy is at least partially reduced by heat convection between the at least partially impinged fluid jet (5) and the at least one impingement device (6).

4. The fluid duct system according to at least one of claims 1 to 3 comprising at least one flow guiding means (7) arranged in the first region (2a) for guiding the at least partially impinged fluid jet (5) after impingement on the at least one impingement device (6) towards the at least one temperature sensitive target (8).

5. The fluid duct system according to at least one of the preceding claims, wherein the first region (2a) comprises at least one fluid outlet (9) configured to let a flow of fluid exit the first region (2a).

6. The fluid duct system according to at least one of the preceding claims, wherein the at least one fluid duct element (4) is of a length and/or arranged in an angle relative to a longitudinal direction of the turbo engine (1), predefined in dependence of a desired velocity and/or direction of the fluid jet (5).

7. The fluid duct system according to at least one of the preceding claims, wherein the at least one fluid duct element (4) has an inner diameter which is significantly smaller than the length of the at least one fluid duct element (4).

8. The fluid duct system according to at least one of the preceding claims, wherein the fluid duct system (S) is to be implemented in a turbofan engine (1) and the second region (3a) lies at least partially in a bypass duct (3) of the turbofan engine (1) and the first region (2a) lies at least partially in a cowl compartment (2) of the turbofan engine (1).

9. The fluid duct system according to at least one of the preceding claims, wherein the fluid duct system (S) is to be implemented in a turbofan engine (1) and the at least one impingement device (6) is a region of a cowl compartment wall (6) of the turbofan engine (1) and/or an extra piece of material located at least partially in the cowl compartment (2).

10. The fluid duct system according to claim 9, wherein the region of the cowl compartment wall (6) comprising the at least one impingement device (6) is designed to be cooled from the outside by a fluid flow at least during movement of the turbofan engine (1).

11. The fluid duct system according to one of the preceding claims, wherein the exiting means (40), in particular a nozzle, is configured to influence the characteristics of the fluid exiting the at least one fluid duct element (4).

12. The fluid duct system according to at least one of the preceding claims comprising a plurality of fluid duct elements (4) arranged in a pattern (P) around the core (11) of the turbo engine (1), connecting the first (2a) and the second region (3a).

13. Turbo engine (1), in particular an aircraft turbo engine (1) comprising at least one fluid duct system (S) according to at least one of claims 1 to 12.

14. Method for thermal management and/or ventilation of a first region containing at least one temperature sensitive target within a turbo engine,
the method comprising the steps of using a pressure gradient inside at least one fluid duct element (4) connecting a second region (3a) with the first region (2a), said first region (2a) having a lower pressure than the second region (3a) at least during operation of the turbo engine (1), in order to generate a fluid jet (5) in the first region (2a), wherein the fluid jet (5) emerging from the at least one fluid duct element (4) is directed towards at least one impingement device (6), so that the fluid jet (5) impinges at least partially on the at least one impingement device (6) where its thermal energy is at least partially reduced and the thus at least partially cooler fluid jet (5) is used for cooling and/or ventilating the first region (2a) containing the at least one temperature sensitive target (8), **characterised in that** at least one of the following properties, namely angle of the at least one fluid duct element (4) relative to the longitudinal direction of the turbo engine (1), length of the at least one fluid duct element (4) or shape of the exiting means (40) of the at least one fluid duct element (4) is adjusted by a control unit.

## Patentansprüche

1. Fluidleitungssystem für eine Turbomaschine (1), umfassend mindestens ein Fluidleitungselement (4) mit einem Austrittsmittel (40), eine Aufprallvorrichtung (6) und einen ersten Bereich (2a), wobei das Fluidleitungssystem für Wärmeregelung und/oder Belüftung des ersten Bereichs (2a), der mindestens ein temperaturempfindliches Ziel (8) enthält, konfiguriert ist, wobei das mindestens eine Fluidleitungselement (4) dazu konfiguriert ist, einen zweiten Bereich (3a) mit dem ersten Bereich (2a) zu verbinden, wobei der erste Bereich (2a) mindestens während des Betriebs der Turbomaschine eine niedrigeren Druck als der zweite Bereich (3a) aufweist; und wobei das mindestens eine Fluidleitungselement (4) ferner mit der mindestens einen Aufprallvorrichtung (6) konfiguriert und kombiniert ist, so dass
- mindestens während des Betriebs der Turbomaschine (1) ein Druckgradient in dem mindestens einen Fluidleitungselement (4) vorhanden ist, der einen Fluidstrahl (5) in dem ersten Bereich (2a) erzeugt, der aus dem mindestens einen Fluidleitungselement (4) zu der mindestens einen Aufprallvorrichtung (6) austritt, und
- während des Betriebs der Fluidstrahl (5) zumindest teilweise auf die mindestens eine Aufprallvorrichtung (6) aufprallt, wo die Wärmeenergie des Fluidstrahls zumindest teilweise reduziert wird, um den somit kühleren Fluidstrahl (5) zum Kühlen und/oder Belüften des ersten Bereichs (2a) zu verwenden,
**dadurch gekennzeichnet, dass** während des Betriebs mindestens eine der folgenden Eigenschaften, nämlich der Winkel des mindestens einen Fluidleitungselements (4) bezüglich der Längsrichtung der Turbomaschine (1), die Länge des mindestens einen Fluidleitungselements (4) oder die Form des Austrittsmittels (40) des mindestens einen Fluidleitungselements (4), einstellbar sind.

2. Fluidleitungssystem nach Anspruch 1, wobei der Fluidstrahl (5) an der mindestens einen Aufprallvorrichtung (6) zumindest teilweise reflektiert und/oder gestreut wird.

3. Fluidleitungssystem nach mindestens einem der Ansprüche 1 bis 2, wobei die Wärmeenergie des zumindest teilweise aufgeprallten Fluidstrahls (5) durch Wärmekonvektion zwischen dem zumindest teilweise aufgeprallten Fluidstrahl (5) und der mindestens einen Aufprallvorrichtung (6) zumindest teilweise reduziert wird.

4. Fluidleitungssystem nach mindestens einem der Ansprüche 1 bis 3, umfassend mindestens ein Strömungsführungsmittel (7), das in dem ersten Bereich (2a) zum Führen des zumindest teilweise aufgeprallten Fluidstrahls (5) nach dem Aufprall auf die mindestens eine Aufprallvorrichtung (6) zu dem mindestens einen wärmeempfindlichen Ziel (8) angeordnet ist.

5. Fluidleitungssystem nach mindestens einem der vorhergehenden Ansprüche, wobei der erste Bereich (2a) mindestens einen Fluidauslass (9) umfasst, der dazu konfiguriert ist, einen Fluidstrom aus dem ersten Bereich (2a) austreten zu lassen.

6. Fluidleitungssystem nach mindestens einem der vorhergehenden Ansprüche, wobei das mindestens eine Fluidleitungselement (4) eine Länge aufweist und/oder in einem Winkel bezüglich einer Längsrichtung der Turbomaschine (1) angeordnet ist, die bzw. der in Abhängigkeit von einer gewünschten Geschwindigkeit und/oder Richtung des Fluidstrahls (5) vordefiniert ist.

7. Fluidleitungssystem nach mindestens einem der vorhergehenden Ansprüche, wobei das mindestens eine Fluidleitungselement (4) einen Innendurchmesser aufweist, der wesentlich kleiner als die Länge des mindestens einen Fluidleitungselements (4) ist.

8. Fluidleitungssystem nach mindestens einem der vorhergehenden Ansprüche, wobei das Fluidleitungssystem (S) in einem Turbofan-Triebwerk (1) implementiert werden soll und der zweite Bereich (3a) zumindest teilweise in einem Bypasskanal (3) des Turbofan-Triebwerks (1) liegt und der erste Bereich (2a) zumindest teilweise in einer Verkleidungskammer (2) des Turbofan-Triebwerks (1) liegt.

9. Fluidleitungssystem nach mindestens einem der vorhergehenden Ansprüche, wobei das Fluidleitungssystem (S) in einem Turbofan-Triebwerk (1) implementiert werden soll und die mindestens eine Aufprallvorrichtung (6) ein Bereich der Verkleidungskammerwand (6) des Turbofan-Triebwerks (1) ist und/oder ein zusätzliches Materialstück zumindest teilweise in der Verkleidungskammer (2) positioniert ist.

10. Fluidleitungssystem nach Anspruch 9, wobei der Bereich der Verkleidungskammerwand (6), der die mindestens eine Aufprallvorrichtung (6) umfasst, dazu ausgelegt ist, mindestens während der Bewegung des Turbofan-Triebwerks (1) durch einen Fluidstrom von außen gekühlt zu werden.

11. Fluidleitungssystem nach mindestens einem der vorhergehenden Ansprüche, wobei das Austrittsmittel (40), insbesondere eine Düse, dazu konfiguriert ist, die Eigenschaften des das mindestens eine Fluidleitungselement (4) verlassenden Fluids zu beeinflussen.

12. Fluidleitungssystem nach mindestens einem der vorhergehenden Ansprüche, umfassend mehrere Fluidleitungselemente (4), die in einem Muster (P) um den Kern (11) der Turbomaschine (1) angeordnet sind und den ersten (2a) und den zweiten Bereich (3a) verbinden.

13. Turbomaschine (1), insbesondere eine Flugzeugturbomaschine (1), umfassend mindestens ein Fluidleitungssystem (S) nach mindestens einem der Ansprüche 1 bis 12.

14. Verfahren zur Wärmeregelung und/oder Belüftung eines ersten Bereichs, der mindestens ein temperaturempfindliches Ziel in einer Turbomaschine enthält, wobei das Verfahren den Schritt des Verwendens eines Druckgradienten innerhalb mindestens eines Fluidleitungselements (4), das einen zweiten Bereich (3a) mit dem ersten Bereich (2a) verbindet, umfasst, wobei der erste Bereich (2a) mindestens während des Betriebs der Turbomaschine (1) einen niedrigeren Druck als der zweite Bereich (3a) aufweist, um einen Fluidstrahl (5) in dem ersten Bereich (2a) zu erzeugen, wobei der aus dem mindestens einen Fluidleitungselement (4) austretende Fluidstrahl (5) zu der mindestens einen Aufprallvorrichtung (6) geleitet wird, so dass der Fluidstrahl (5) zumindest teilweise auf die mindestens eine Aufprallvorrichtung (6) aufprallt, wo seine Wärmeenergie zumindest teilweise reduziert wird und der somit zumindest teilweise kühlere Fluidstrahl (5) zum Kühlen und/oder Belüften des ersten Bereichs (2a), der das mindestens eine temperaturempfindliche Ziel (8) enthält, verwendet wird, **dadurch gekennzeichnet, dass** mindestens eine der folgenden Eigenschaften, nämlich der Winkel des mindestens einen Fluidleitungselements (4) bezüglich der Längsrichtung der Turbomaschine (1), die Länge des mindestens einen Fluidleitungselements (4) oder die Form des Austrittsmittels (40) des mindestens einen Fluidleitungselements (4), durch eine Steuerschaltung eingestellt werden.

## Revendications

1. Système de conduit de fluide pour un turbomoteur (1) comprenant au moins un élément de conduit de fluide (4) avec un moyen de sortie (40), un dispositif d'impact (6) et une première région (2a), le système de conduit de fluide étant configuré pour la gestion thermique et/ou la ventilation de la première région (2a) contenant au moins une cible sensible à la température (8), dans lequel l'au moins un élément de conduit de fluide (4) étant configuré pour connecter une deuxième région (3a) à la première région (2a), ladite première région (2a) ayant une pression inférieure à la deuxième région (3a) au moins au cours du fonctionnement du turbomoteur; et dans lequel l'au moins un élément de conduit de fluide (4) étant en outre configuré et combiné avec l'au moins un dispositif d'impact (6) de telle sorte que:
- au moins au cours du fonctionnement du turbomoteur (1), un gradient de pression soit présent à l'intérieur de l'au moins un élément de conduit de fluide (4) générant dans la première région (2a) un jet de fluide (5) qui sort de l'au moins un élément de conduit de fluide (4) vers l'au moins un dispositif d'impact (6), et
- au cours du fonctionnement, ledit jet de fluide (5) frappe au moins en partie l'au moins un dispositif d'impact (6), où l'énergie thermique du jet de fluide est au moins en partie réduite afin d'utiliser le jet de fluide dès lors plus froid (5) pour refroidir et/ou ventiler la première région (2a), **caractérisé en ce qu'**au cours du fonctionnement, au moins l'une des propriétés suivantes, à savoir l'angle de l'au moins un élément de conduit de fluide (4) par rapport à la direction longitudinale du turbomoteur (1), la longueur de l'au moins un élément de conduit de fluide (4) ou la forme du moyen de sortie (40) de l'au moins un élément de conduit de fluide (4) sont ajustables.

2. Système de conduit de fluide selon la revendication 1, dans lequel le jet de fluide (5) est au moins en partie réfléchi et/ou diffusé au niveau d'au moins un dispositif d'impact (6).

3. Système de conduit de fluide selon au moins l'une des revendications 1 et 2, dans lequel l'énergie thermique du jet de fluide (5) au moins en partie impacté est au moins en partie réduite par convection thermique entre le jet de fluide (5) au moins en partie impacté et l'au moins un dispositif d'impact (6).

4. Système de conduit de fluide selon au moins l'une des revendications 1 à 3, comprenant au moins un moyen de guidage d'écoulement (7) disposé dans la première région (2a) pour guider le jet de fluide (5) au moins en partie impacté après son impact sur l'au moins un dispositif d'impact (6) vers l'au moins une cible sensible à la température (8) .

5. Système de conduit de fluide selon au moins l'une des revendications précédentes, dans lequel la première région (2a) comprend au moins une sortie de fluide (9) configurée pour permettre à un écoulement de fluide de sortir de la première région (2a).

6. Système de conduit de fluide selon au moins l'une des revendications précédentes, dans lequel l'au moins un élément de conduit de fluide (4) présente une longueur et/ou est disposé suivant un angle par rapport à une direction longitudinale du turbomoteur (1) qui sont prédéfinis en fonction d'une vitesse souhaitée et/ou d'une direction souhaitée du jet de fluide (5).

7. Système de conduit de fluide selon au moins l'une des revendications précédentes, dans lequel l'au moins un élément de conduit de fluide (4) présente un diamètre intérieur qui est considérablement plus petit que la longueur de l'au moins un élément de conduit de fluide (4).

8. Système de conduit de fluide selon au moins l'une des revendications précédentes, dans lequel le système de conduit de fluide (S) doit être mis en œuvre dans un réacteur à double flux (1) et la deuxième région (3a) est située au moins en partie dans un conduit de dérivation (3) du réacteur à double flux (1) et la première région (2a) est située au moins en partie dans un compartiment de carénage (2) du réacteur à double flux (1).

9. Système de conduit de fluide selon au moins l'une des revendications précédentes, dans lequel le système de conduit de fluide (S) doit être mis en œuvre dans un réacteur à double flux (1) et l'au moins un dispositif d'impact (6) est une région d'une paroi de compartiment de carénage (6) du réacteur à double flux (1) et/ou un élément supplémentaire de matériau situé au moins en partie dans le compartiment de carénage (2).

10. Système de conduit de fluide selon la revendication 9, dans lequel la région de la paroi de compartiment de carénage (6) comprenant l'au moins un dispositif d'impact (6) est conçue pour être refroidie depuis l'extérieur par un écoulement de fluide au moins au cours du mouvement du réacteur à double flux (1).

11. Système de conduit de fluide selon l'une des revendications précédentes, dans lequel le moyen de sortie (40), en particulier une tuyère, est configuré pour influencer les caractéristiques du fluide sortant de l'au moins un élément de conduit de fluide (4).

12. Système de conduit de fluide selon au moins l'une des revendications précédentes, comprenant une pluralité d'éléments de conduit de fluide (4) disposés suivant un motif (P) autour du cœur (11) du turbomoteur (1), reliant la première (2a) et la deuxième (3a) régions.

13. Turbomoteur (1), en particulier turbomoteur d'aéronef (1) comprenant au moins un système de conduit de fluide (S) selon au moins l'une des revendications 1 à 12.

14. Procédé de gestion thermique et/ou de ventilation d'une première région contenant au moins une cible sensible à la température à l'intérieur d'un turbomoteur,
le procédé comprenant les étapes suivantes:
utilisation d'un gradient de pression à l'intérieur d'au moins un élément de conduit de fluide (4) reliant une deuxième région (3a) à la première région (2a), ladite première région (2a) ayant une pression inférieure à la deuxième région (3a) au moins au cours du fonctionnement du turbomoteur (1) afin de générer un jet de fluide (5) dans la première région (2a), le jet de fluide (5) sortant de l'au moins un élément de conduit de fluide (4) étant dirigé vers au moins un dispositif d'impact (6) de telle sorte que le jet de fluide (5) frappe au moins en partie l'au moins un dispositif d'impact (6) où son énergie thermique est au moins en partie réduite et le jet de fluide (5) dès lors au moins en partie plus froid est utilisé pour refroidir et/ou ventiler la première région (2a) contenant l'au moins une cible sensible à la température (8), **caractérisé en ce que**
au moins l'une des propriétés suivantes, à savoir l'angle de l'au moins un élément de conduit de fluide (4) par rapport à la direction longitudinale du turbomoteur (1), la longueur de l'au moins un élément de conduit de fluide (4) ou la forme du moyen de sortie (40) de l'au moins un élément de conduit de fluide (4) sont ajustés par une unité de commande.
